# EUROPEAN PATENT APPLICATION

(11) **EP 1 519 382 A2**
(43) Date of publication of application: **30.03.2005**
(21) Application number: 04021199.7
(22) Date of filing: 07.09.2004
(51) Int. Cl.: G11B 27/10

(54) **Information reproducing method, recording medium on which information reproducing program is computer-readably recorded, and information reproducing apparatus**

(30) Priority: 25.09.2003 JP 2003333961
(71) Applicant: Pioneer Corporation, Tokyo-to (JP)
(72) Inventor: Tanabe, Masashi, c/o Pioneer Corporation, Kawagoe-shi Saitama-ken (JP); Matsuo, Takeshi, c/o Pioneer Corporation, Kawagoe-shi Saitama-ken (JP); Kusumoto, Yuuki, c/o Pioneer Corporation, Kawagoe-shi Saitama-ken (JP)
(74) Representative: Tappe, Hartmut

(57) **Abstract**

An information reproducing apparatus 400 reproduces music information with an information reproducing portion 405. And it refers to an output voice, an output video, a voice level and so on during reproduction of the music information, and specifies a starting time and an ending time of the arbitrary phrase such as a refrain on a touch panel with a reproducing section specifying portion 411. And it generates a phrase information file indicating the phrase (reproducing section) consisting of the starting time and the ending time of the phrase with a reproducing section information generating portion 412. In the case where the phrase information file and the music information thereof are extracted to reproduce only a phrase portion or the entire music information, it is also possible to reproduce it by having only a sound quality of the phrase portion changed by a sound quality changing portion 410.

## Description

### BACKGROUND OF THE INVENTION

### 1. Field of the Invention

The present invention relates to an information reproducing method, a recording medium on which an information reproducing program is computer-readably recorded, and an information reproducing apparatus. However, use of this invention is not limited to the above-mentioned information reproducing method, recording medium on which information reproducing program is computer-readably recorded, and information reproducing apparatus.

### 2. Description of the Related Art

So far, there have been a recording medium on which a reproducing program is computer-readably recorded and a reproducing apparatus known for their capability of playing a medley of a plurality of tunes arbitrarily selected by a user. The recording medium and the reproducing apparatus record address information indicating a reproducing position of a portion of music data such as a refrain portion on the recording medium as extracted reproducing data or hold it on an ROM card and so on which the reproducing apparatus is provided with, correspondingly to the recording medium which is placed.

Japanese Patent Application Laid-Open Publication No. Hei. 8-147942 discloses that each program-specified tune is reproduced only in part (from an entry point to an exit point) based on the extracted reproducing data, and that it becomes a reproduced performance in which the refrain portions and so on of the tunes are linked so that it becomes a performance in a so-called medley form.

As for the above-mentioned recording medium and reproducing apparatus, however, extracted reproducing data recorded on the recording medium or the ROM card is created in advance by a producer of the recording medium. Therefore, the reproducing apparatus reproduces a portion of a tune based on the extracted reproducing data created as intended by the producer of the recording medium.

To be more specific, even if a user desires to change an address position or an address length of the tune identified by the extracted reproducing data, the above-mentioned conventional recording medium and reproducing apparatus cannot change the extracted reproducing data. Therefore, they cannot extract and reproduce the portion of the tune desired by the user. In fact, it is a forced performance according to the extracted reproducing data created as intended by the producer of the recording medium.

The above-mentioned conventional recording medium and reproducing apparatus are not able to extract and reproduce any portion other than the portion of the tune identified by the extracted reproducing data created in advance by the producer of the recording medium. Thus, they are inferior in convenience.

### SUMMARY OF THE INVENTION

The present invention has been implemented in order to at least eliminate such circumstances as an object thereof. That is, an object of the present invention is to provide an information reproducing method, a recording medium having an information reproducing program recorded thereon and an information reproducing apparatus capable of setting an arbitrary phrase of a refrain portion and so on.

The present invention will be described below. Although reference numerals in the accompanying drawings will be accessorily written as parenthetic numerals for descriptive convenience, the present invention is not limited to the illustrated features.

The above obj ect of the present invention can be achieved by an information reproducing method provided with: an information reproducing process which continuously reproduces reproducing information; a reproducing position specifying process which specifies a plurality of arbitrary reproducing positions in the reproducing information; and a reproducing section information generating process which generates reproducing section information indicating a portion of reproducing sections in the reproducing information based on the plurality of reproducing positions specified by the reproducing position specifying process.

The above obj ect of the present invention can be achieved by a recording medium on which an information reproducing program is recorded so as to be readable through a computer which is included in an information reproducing apparatus with a pre-installed recording medium, wherein the information reproducing program causes the computer to execute the above-mentioned information reproducing method.

The above object of the present invention can be achieved by an information reproducing method provided with: an information reproducing process which continuously reproduces reproducing information; a reproducing position specifying process which specifies an arbitrary reproducing position in the reproducing information; and a reproducing section information generating process which generates reproducing section information indicating a portion of reproducing sections in the reproducing information based on the reproducing position specified by the reproducing position specifying process and a preset reproducing position.

The above obj ect of the present invention can be achieved by a recording medium on which an information reproducing program is recorded so as to be readable through a computer which is included in an information reproducing apparatus with a pre-installed recording medium, wherein the information reproducing program causes the computer to execute the above-mentioned information reproducing method.

The above obj ect of the present invention can be achieved by an information reproducing apparatus (400) provided with: an information reproducing device (405) which continuously reproduces reproducing information; a specifying device (411) which specifies a plurality of arbitrary reproducing positions in the reproducing information; and a reproducing section information generating device (412) which generates reproducing section information indicating a portion of reproducing sections in the reproducing information based on the plurality of reproducing positions specified by the specifying device (411).

The above obj ect of the present invention can be achieved by an information reproducing apparatus (400) provided with: an information reproducing device (405) which continuously reproduces reproducing information; a specifying device (411) which specifies an arbitrary reproducing position in the reproducing information; and a reproducing section information generating device (412) which generates reproducing section information indicating a portion of reproducing sections in the reproducing information based on the reproducing position specified by the specifying device (411) and a preset reproducing position.

### BRIEF DESCRIPTION OF THE DRAWINGS

FIG. 1 is a block diagram showing a hardware configuration of an information reproducing apparatus according to an embodiment of the present invention;
FIG. 2 is a block diagram showing an example of the hardware configuration of the voice I/F of the information reproducing apparatus according to the embodiment of the present invention;
FIG. 3 is an explanatory diagram for showing a data structure of a reproducing information database of the information reproducingapparatus according to the embodiment of the present invention;
FIG. 4 is a block diagram showing the functional configuration of the information reproducing apparatus according to the embodiment of the present invention;
FIG. 5 is an explanatory diagram showing an example of a data format of a phrase information file;
FIG. 6 is an explanatory diagram showing another example of the data format of the phrase information file;
FIG. 7 is an explanatory diagram showing an example of the data format of a play list;
FIG. 8 is an explanatory diagram showing an example of the data format of the phrase information file using the play list;
FIG. 9 is a flowchart showing a generation procedure of the phrase information file of the information reproducing apparatus according to the embodiment of the present invention;
FIG. 10 is a flowchart showing a phrase setting procedure of the information reproducing apparatus according to the embodiment of the present invention;
FIG. 11 is a flowchart showing a phrase fine-tuning procedure of the information reproducing apparatus according to the embodiment of the present invention;
FIG. 12 is an explanatory diagram showing an example of a screen of the touch panel of the information reproducing apparatus according to the embodiment of the present invention;
FIG. 13 is an explanatory diagram showing an example of the screen of the touch panel of the information reproducing apparatus according to the embodiment of the present invention;
FIG. 14 is an explanatory diagram showing an example of the screen of the touch panel of the information reproducing apparatus according to the embodiment of the present invention;
FIG. 15 is an explanatory diagram showing an example of the screen of the touch panel of the information reproducing apparatus according to the embodiment of the present invention;
FIG. 16 is an explanatory diagram showing an example of sliding a starting slider in a reproduction ending direction of a time base;
FIG. 17 is an explanatory diagram showing an example of sliding the starting slider in a reproduction starting direction of the time base;
FIG. 18 is an explanatory diagram showing an example of a display screen in a phrase reproduction mode on the touch panel of the information reproducing apparatus according to the embodiment of the present invention;
FIG. 19 is a flowchart showing first halves of a phrase reproduction procedure, a reserved reproduction procedure and a sound quality change procedure of the information reproducing apparatus according to the embodiment of the present invention;
FIG. 20 is a flowchart showing second halves of the phrase reproduction procedure, reserved reproduction procedure and sound quality change procedure of the information reproducing apparatus according to the embodiment of the present invention;
FIG. 21 is an explanatory diagram showing an example of phrase setting using another example (an LED segment) of a display device of the information reproducing apparatus according to the embodiment of the present invention; and
FIG. 22 is a flowchart showing another example of the phrase setting procedure of the information reproducing apparatus according to the embodiment of the present invention.

### DESCRIPTION OF THE PREFERRED EMBODIMENTS

Hereafter, a preferred embodiment of an information reproducing method, an information reproducing program and an information reproducing apparatus according to the present invention will be described in detail by referring to attached drawings.

### (Hardware configuration of the information reproducing apparatus)

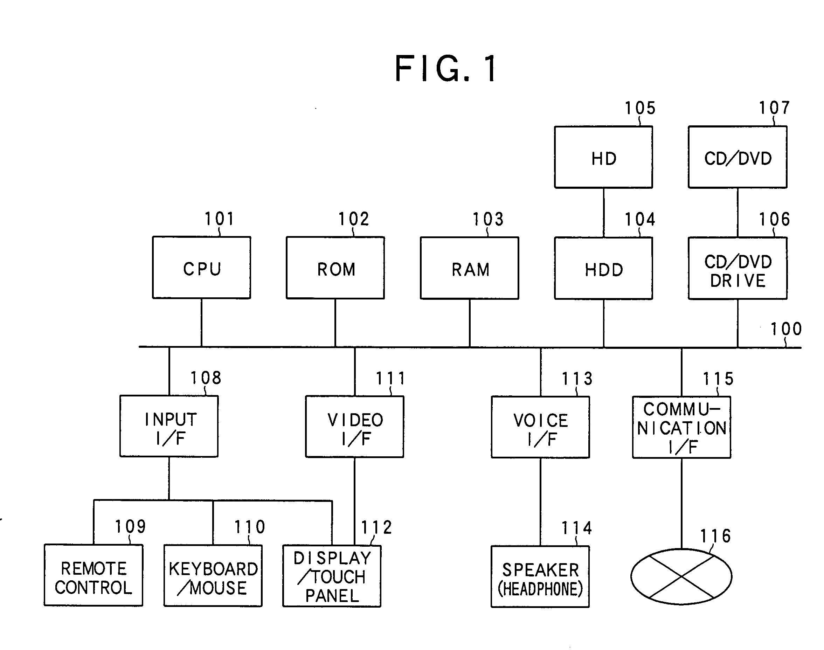

FIG. 1 is a block diagram showing a hardware configuration of the information reproducing apparatus according to the embodiment of the present invention. In FIG. 1, the information reproducing apparatus comprises a CPU (Central Processing Unit) 101, an ROM (Read Only Memory) 102, an RAM (Random Access Memory) 103, an HDD (Hard Disk Drive) 104, an HD (Hard Disk) 105, a CD (Compact Disk) /DVD (Digital Versatile Disk) drive 106, a CD/DVD 107 as an example of a detachable recording medium, an input I/F (Interface) 108, a remote control unit 109, a keyboard/mouse 110, a video I/F (Interface) 111, a display/touch panel 112, a voice I/F (Interface) 113, a speaker (headphone) 114 and a communication I/F (Interface) 115. And components 101 to 115 are connected by a bus 100 respectively.

Here, the CPU 101 exerts control over the entire information reproducing apparatus. The ROM 102 stores a program such as a boot program. The RAM 103 is used as a work area of the CPU 101. The HDD 104 controls read and write of data to the HD 105 under the control of the CPU 101. The HD 105 stores written data under the control of the HDD 104.

The CD/DVD drive 106 controls the read and write of data to the CD/DVD 107 under the control of the CPU 101. The CD/DVD 107 is the detachable recording medium from which recorded data is read under the control of the CD/DVD drive 106. It is also possible to use a writable recording medium as the CD/DVD 107. The detachable recording medium may also be a CD-ROM (CD-R (Recordable), CD-RW (ReWritable)), an MO (Magneto-Optical disk) or a memory card other than the CD/DVD 107.

The input I/F 108 inputs data sent from the remote control unit 109 comprising a plurality of keys for inputting characters, numerical values, various instructions and so on and the keyboard/mouse 110. It is also possible, though not shown, to provide an output I/F as required so as to connect a scanner for optically reading characters and images and a printer for printing characters and images via the output I/F.

The video I/F 111 is connected to the display/touch panel 112 for video display. The display/touch panel 112 has various data such as icons, a cursor, a menu, windows or characters and images displayed thereon. For instance, a CRT, a TFT liquid crystal display, a plasma display and so on may be adopted as the display 112. The touch panel 112 is connected to the input I/F 108, and detects whether the touch panel 112 is pushed or unpushed to input data to the input I/F 108.

The voice I/F 113 is connected to the speaker (or headphone) 114 for voice output, and voice is outputted from the speaker 114. The communication I/F 115 is connected to a network 116 via radio or a communication cable to function as an interface between the network 116 and the CPU 101. The network 116 may be an LAN (Local Area Network), a WAN (Wide Area Network) , a public switched network, a cell phone network and so on.

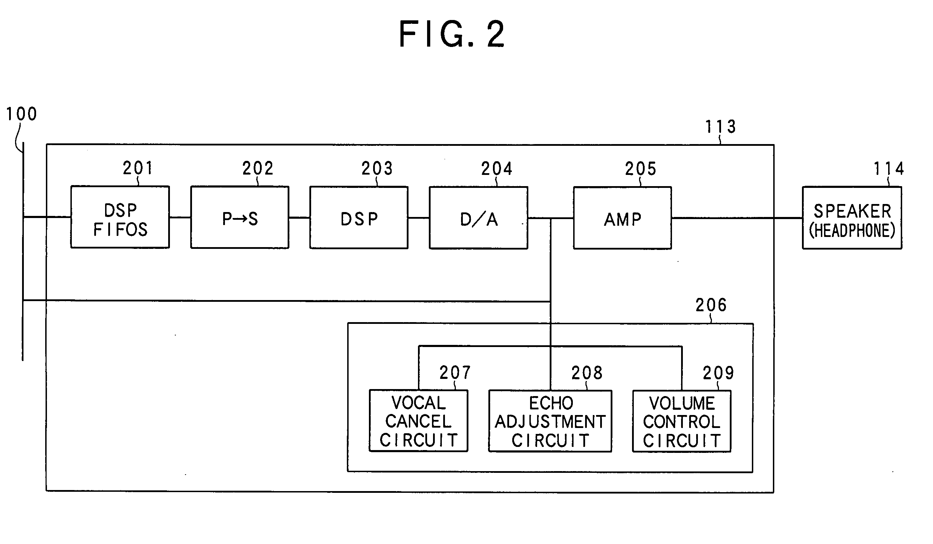

Next, an example of the hardware configuration of the voice I/F 113 will be described. FIG. 2 is a block diagram showing an example of the hardware configuration of the voice I/F 113. As shown in FIG. 2, the voice I/F 113 is comprised of an FIFO memory (DSPFIFOS) 201, a parallel to serial conversion portion 202, a DSP (Digital Signal Processor) 203, a D/A (Digital/Analog) converter 204, an amplifier 205 and a sound quality changing circuit 206 for instance.

The FIFO memory 201 is a memory for temporarily storing the data transferred from the CPU 101 and transferring voice data to the DSP 203. The parallel to serial conversion portion 202 converts parallel voice data transferred from the FIFO memory 201 to serial voice data. The DSP 203 digitally processes the serial voice data outputted from the parallel to serial conversion portion 202. The D/A converter 204 converts the digitally processed voice data to analog. The amplifier 205 amplifies the voice data converted to analog and outputs it to the speaker 114.

The sound quality changing circuit 206 is comprised of a vocal cancel circuit 207, an echo adjustment circuit 208, a volume control circuit 209 and so on for instance. The vocal cancel circuit 207 cancels vocal sound according to an instruction from the CPU 101. For instance, it can set off the vocal sound of music data outputted to the right and left speakers 114 to lower a volume of the vocal sound. The echo adjustment circuit 208 increases and decreases an echo level according to the instruction from the CPU 101. The volume control circuit 209 controls an amount of amplification by the amplifier 205 to adjust the volume according to the instruction from the CPU 101.

### (Configuration of a reproducing information database)

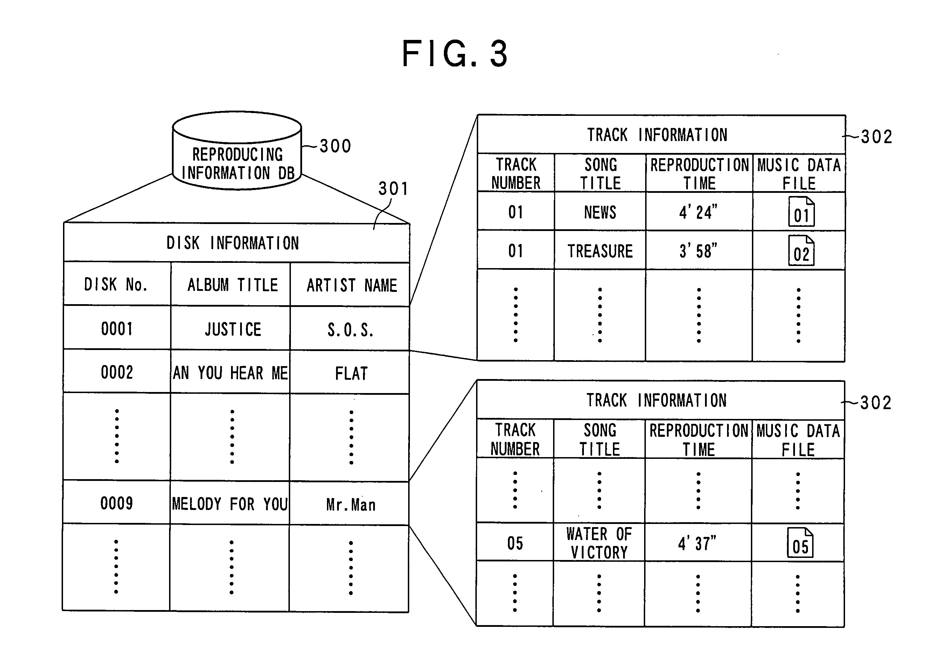

Next, a description will be given as to a reproducing information database 300 for storing continuously reproduced reproducing information. The reproducing information database 300 implements its functions with the ROM 102, the RAM 103, the HD 105 and the CD/DVD 107 and so on shown in FIG. 1 for instance. FIG. 3 is an explanatory diagram for showing a data structure of the reproducing information database 300.

For instance, voice information and video information can be named as the reproducing information. Music information representing music and the voice information such as contents of conversation and sound effects can be named as examples of the voice information. As for examples of the video information, the video information including commercially available video contents such as movies, live videos of music and documentaries, videos of recorded TV programs, images taken by a video camera and so on can be named. Here, a description will be given by using the music information as an example of the reproducing information to be stored in the reproducing information database 300.

As shown in FIG. 3, the music information as an example of the reproducing information comprises disk information 301. The disk information 301 has a disk number, an album title and an artist name. Each piece of the disk information 301 has track information 302 added thereto. The track information 302 is comprised of reproduction time information consisting of a track number, a song title, reproduction starting time and ending time, reproduction elapsed time and so on and a music data file.

The reproduction time information allows a reproducing position of the music information to be identified. The reproduction starting time identifies a reproduction starting position of the music information, and the reproduction ending time identifies a reproduction ending position thereof. And reproduction elapsed time information indicates how long the music information has been reproduced since the reproduction starting time. It is possible to identify the reproducing position by specifying the reproduction elapsed time information. The reproduction time information functions as an address position indicating the reproducing position of the music information.

The music data file is comprised of an audio-compression format such as MP3 (MPEG (Motion Picture Experts Group) -1 Audio Layer 3) or WMA (Windows Media Audio (Windows is a registered trademark.)) for instance. In addition, the audio-compression format may adopt various audio-compression formats such as ATRAC 3 (Adaptive TRansform Acoustic coding 3), MPEG-2AAC (Advanced Audio Coding) , MP4 (MPEG-1 Audio Layer 4), QDesign Music Codec and TwinVQ (Transform-Domain Weighted Interleave Vector Quantization). The music data file may be an uncompressed data format.

### (Functional configuration of the information reproducing apparatus)

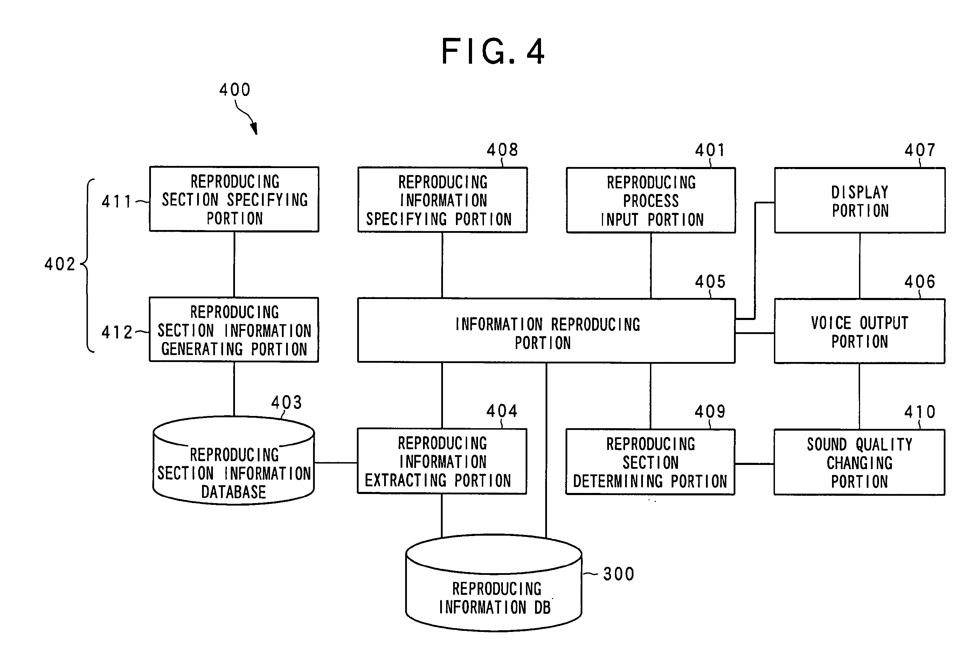

Next, a description will be given as to a functional configuration of the information reproducing apparatus according to the embodiment of the present invention. FIG. 4 is a block diagram showing the functional configuration of the information reproducing apparatus according to the embodiment of the present invention. As shown in FIG. 4, an information reproducing apparatus 400 is comprised of a reproducing process input portion 401, a reproducing section setup portion 402, a reproducing section information database 403, a reproducing information extracting portion 404, an information reproducing portion 405, a voice output portion 406, a display portion 407, a reproducing information specifying portion 408, a reproducing section determining portion 409, a sound quality changing portion 410 and the reproducing information database 300 (refer to FIG. 3).

The reproducing process input portion 401 performs reproducing inputs relating to reproduction such as selection and search of the reproducing information, starting the reproduction of the selected reproducing information, stopping the reproduction, a temporary stop, fast-forwarding, rewinding, skipping, random reproduction, play list creation and reproducing a section according to generated reproducing section information. The reproducing process input portion 401 implements its functions with the remote control unit 109, the keyboard/mouse 110 and the touch panel 112 shown in FIG. 1 and an input key not shown or the input I/F 108 shown in FIG. 1 for instance.

The reproducing section setup portion 402 is comprised of a reproducing section specifying portion 411 and a reproducing section information generating portion 412. The reproducing section specifying portion 411 specifies a plurality of arbitrary reproducing positions of the reproducing information. It also fine-tunes specified reproducing positions. And it also performs a decisive input of the reproducing section. The reproducing section specifying portion 411 implements its functions with the remote control unit 109, the keyboard/mouse 110, the touch panel 112 shown in FIG. 1 and the input key not shown or the input I/F 108 shown in FIG. 1.

The reproducing section information generating portion 412 generates the reproducing section information indicating a portion of the reproducing section in a series of the reproduction of the reproducing information based on the reproducing positions specified by the reproducing section specifying portion 411. To be more precise, it sets up the reproducing section according to the plurality of reproducing positions specified by the reproducing section specifying portion 411. And it generates the reproducing section information based on the reproduction starting position and the reproduction ending position of the reproducing information in the reproducing section (hereafter, a description will be made by referring to this reproducing information as a portion of the reproducing information) and information identifying the portion of the reproducing information. Details of the reproducing section information will be described later. The reproducing section information generating portion 412 implements its functions, for instance, by having programs stored in the recording media such as the ROM 102, the RAM 103, the HD 105 and the CD/DVD 107 and so on shown in FIG. 1 executed by the CPU 101. The reproducing section information database 403 stores the reproducing section information generated by the reproducing section information generating portion 412. The reproducing section information database 403 implements its functions, for instance, with the ROM 102, the RAM 103, the HD 105 and the CD/DVD 107 and so on shown in FIG. 1.

The reproducing information extracting portion 404 extracts a portion of the reproducing information in that reproducing section based on the reproducing section information stored in the reproducing section information database 403 and the reproducing information stored in the reproducing information database 300. The reproducing information extracting portion 404 implements its functions, for instance, by having the programs stored in the recording media such as the ROM 102, the RAM 103, the HD 105 and the CD/DVD 107 and so on shown in FIG. 1 executed by the CPU 101.

The information reproducing portion 405 performs a reproduction process of the reproducing information stored in the reproducing information database 300. To be more precise, it performs the reproduction process such as starting the reproduction, stopping the reproduction, a temporary stop, fast-forwarding, rewinding, skipping, random reproduction and play list creation of the selected or searched reproducing information according to specifications from the reproducing process input portion 401 or the reproducing information specifying portion 408.

The information reproducing portion 405 performs the reproduction process of the portion of the reproducing information extracted by the reproducing information extracting portion 404. The information reproducing portion 405 implements its functions, for instance, by having the programs stored in the recording media such as the ROM 102, the RAM 103, the HD 105 and the CD/DVD 107 and so on shown in FIG. 1 executed by the CPU 101.

The reproducing information specifying portion 408 specifies the reproduction of the reproducing information including the portion of the reproducing information while the portion of the reproducing information is reproduced by the information reproducing portion 405. To be more specific, it is a function of making a reservation for reproducing the entire reproducing information while reproducing the portion of the reproducing information. The reproducing information specifying portion 408 implements its functions with the remote control unit 109, the keyboard/mouse 110, the touch panel 112 shown in FIG. 1 and the input key not shown or the input I/F 108 shown in FIG. 1.

The voice output portion 406 outputs the voice of the reproducing information reproduced by the information reproducing portion 405. The voice output portion 406 implements its functions with the voice I/F 113 or the speaker (or headphone) 114 shown in FIGs. 1 and 2.

The display portion 407 displays reproduction progress statuses of the continuously reproduced reproducing information in chronological order. For instance, it can display a change in an output status of a voice level of the reproducing information in a time-base direction. It can also simply display a bar indicating to what degree the reproducing information has been reproduced in the entire reproduction time.

The display portion 407 can also display the video of the reproducing information reproduced by the information reproducing portion 405. Furthermore, it can display the reproduction elapsed time information and a graphic equalizer of the reproducing information currently reproduced. Furthermore, it can display the input keys indicating the reproducing process input portion 401, the reproducing section specifying portion 411 and the reproducing information specifying portion 408. The display portion 407 implements its functions with the display/touch panel 112 or the video I/F 111 shown in FIG. 1.

The reproducing section determining portion 409 determines whether or not the reproducing information of which reproducing section information is reproduced by the reproducing section information generating portion 412 reproduces the reproducing information of a portion of the reproducing sections indicated by the reproducing section information. To be more precise, it determines whether or not the reproducing position of the currently reproduced reproducing information exists between the reproduction starting position and the reproduction ending position of the portion of the reproducing information and whether or not the reproduction starting position and the reproduction ending position match with a current reproducing position. The reproducing section determining portion 409 implements its functions, for instance, by having the programs stored in the recording media such as the ROM 102, the RAM 103, the HD 105 and the CD/DVD 107 and so on shown in FIG. 1 executed by the CPU 101.

The sound quality changing portion 410 changes a sound quality of the voice when the portion of the reproducing information is outputted as the voice based on a determination result determined by the reproducing section determining portion 409. To be more precise, it changes the sound quality of the voice by switching between the sound quality of the voice when the portion of the reproducing information is outputted as the voice and the sound quality of the voice when the reproducing information other than the portion of the reproducing information is outputted as the voice.

For instance, it is possible to change the sound quality of the voice outputted until reaching the reproduction starting position of the portion of the reproducing information to be different from the sound quality of the voice outputted by reproducing the portion of the reproducing information. It is also possible to change the sound quality of the voice outputted by reproducing the portion of the reproducing information to be different from the sound quality of the voice outputted after the reproduction ending position of the portion of the reproducing information (after completing the output of the portion of the reproducing information). The sound quality of the voice outputted until reaching the reproduction starting position of the portion of the reproducing information and the sound quality of the voice outputted after finishing the reproduction of the portion of the reproducing information may be either the same sound quality or different sound qualities.

The sound quality can be changed by adjusting the sound quality changing circuit 206 (such as the vocal cancel circuit 207, the echo adjustment circuit 208 and the volume control circuit 209 for instance) provided to the voice I/F 113 shown in FIG. 2. For instance, it is possible, with the vocal cancel circuit 207, to change an output of vocal sound between outside and inside of the reproducing section. It is also possible, with the echo adjustment circuit 208, to change intensity of an echo between the outside and the inside of the reproducing section.

Furthermore, it is possible, with the volume control circuit 209, to change the volume between the outside and the inside of the reproducing section. The sound quality changing portion 410 implements its functions, for instance, either by having the programs stored in the recording media such as the ROM 102, the RAM 103, the HD 105 and the CD/DVD 107 and so on shown in FIG. 1 executed by the CPU 101 or by means of the voice I/F 113 shown in FIGs. 1 and 2.

Incidentally, for example, the information reproducing apparatus 400 according to this embodiment serves as an information reproducing apparatus according to the present invention. And, the information reproducing portion 405 according to this embodiment serves as an information reproducing device according to the present invention, the reproducing section specifying portion 411 according to this embodiment serves as a specifying device according to the present invention, the reproducing section information generating portion 412 according to this embodiment serves as a reproducing section information generating device according to the present invention, the reproducing information extracting portion 404 according to this embodiment serves as a reproducing information extracting device according to the present invention, the reproducing information specifying portion 408 according to this embodiment serves as a reproducing information specifying device according to the present invention, the reproducing section determining portion 409 according to this embodiment serves as a reproducing section determining device according to the present invention, and the sound quality changing portion 410 according to this embodiment serves as a sound quality changing device according to the present invention.

### (Contents of the reproducing section information)

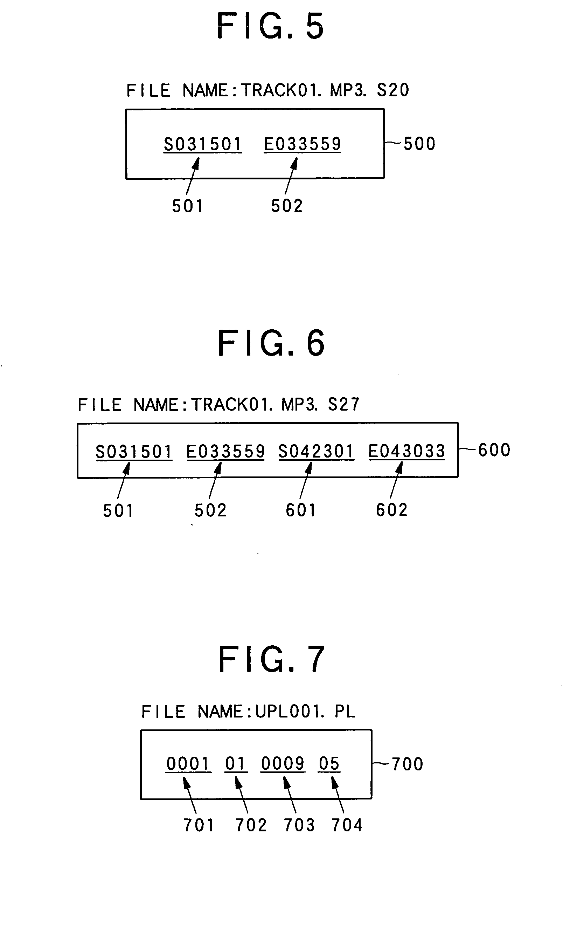

Next, a description will be given as to an example of the reproducing section information generated by the reproducing section information generating portion 412. Here, as an example of the reproducing section information, a description will be given as to a phrase information file in which a phrase of a refrain portion of music information representing music is set as the reproducing section. FIGs. 5 and 6 are explanatory diagrams showing examples of a data format of the phrase information file.

A data format 500 of the phrase information file shown in FIG. 5 can be represented as "S031501E033559" for instance. Here, "S031501" represents a reproduction starting time 501 of the reproducing section, that is, the address position of a 3 minutes 15 seconds 01 frame from a start of a tune.

"E033559" represents a reproduction ending time 502 of the reproducing section, that is, the address position of a 3 minutes 35 seconds 59 frame from the start of the tune. As for the address position of the frame, in the case where the data format is MP3 or WMA, it represents a position equivalent to the frame calculated from a relationship between a number of music data samples and a bit rate. In the case where the data format is uncompressed data, it indicates the address position itself indicated by the reproduction time information.

The phrase information file is the phrase information file of the refrain portion of a first tune (track number 01) of a disk number 0001 shown in FIG. 3. If a data compression format of a data file of a song title "NEWS" is MP3, a file name of the phrase information file can be represented as "TRACK01. MP3. S20." This "S20" represents a time length of the phrase, which is 20 seconds in this case.

It is also possible to set a plurality of phrases of the refrain portion (two locations for instance) in one tune. For instance, it is possible to generate a data format 600 of the phrase information file shown in FIG. 6 by adding a data format "S042301E043033" after the data format 500 shown in FIG. 5.

The "S042301" of the added data format represents a reproduction starting time 601 of a next reproducing section, that is, the address position of a 4 minutes 23 seconds 01 frame from the start of the tune. The "E043033" represents a reproduction ending time 602 of the next reproducing section, that is, the reproducing position of a 4 minutes 30 seconds 33 frame from the start of the tune.

As the phrase time length is 7 seconds, the file name of the phrase information file can be represented as "TRACK01. MP3. S27." The "S27" represents a total time length of the two phrases, which is 27 seconds in this case.

In the case where the play list comprised of the tunes of a plurality of disks is created, it is possible to create the phrase information file for each play list. For instance, a description will be given as to the case where, as shown in FIG. 7, a data format 700 of the play list of a file name "UPL001. PL" is "000101000905."

The data format 700 of the play list is an example of selecting one tune from the tunes included in each of the two disks. To be more specific, as shown in FIG. 7, the data format 700 shows the information of the disk number 701 as "0001" and the information of the track number 702 thereof as "01." And it shows the information of the disk number 703 as "0009" and the information of the track number 704 thereof as "05."

To be more specific, it means that the play list is comprised of the music information (the title "NEWS" shown in FIG. 3) of the information "01" of the track number 702 in the information "0001" of the disk number 701 and the music information (the song title "WATER OF VICTORY" shown in FIG. 3) of the information "05" of the track number 704 in the information "0009" of the disk number 702.

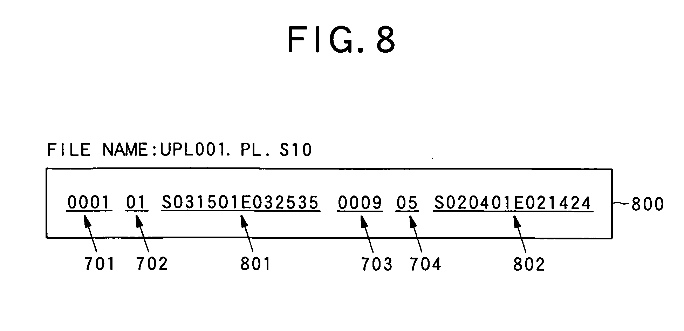

As shown in FIG. 8, a data format 800 of the phrase information file is "000101S031501E032535000202S020401E021424." The data format 800 has the information "0001" of the disk number 701 and the information "01" of the track number 702 arranged therein from a beginning as the phrase of the first tune, and subsequently has the information of a phrase reproducing section 801 comprised of a starting time "S031501" and an ending time "E032535" of the phrase arranged therein.

The data format 800 has the information "0009" of the disk number 703 and the information "05" of the track number 704 as the phrase of the second tune arranged therein following the information of the phrase reproducing section 801, and subsequently has the information of a phrase reproducing section 802 comprised of a starting time "S020401" and an ending time "E021424" of the phrase arranged therein.

To be more specific, the music information (the song title "NEWS" shown in FIG. 3) of the track number "01" of the disk number "0001" has the reproducing section from a 3 minutes 15 seconds 01 frame to a 3 minutes 25 seconds 35 frame (phrase time length: 10 seconds) setasthephraseoftherefrainportion. Likewise, the music information (the song title "WATER OF VICTORY" shown in FIG. 3) of the track number "05" of the disk number "0009" has the reproducing section from a 2 minutes 04 seconds 01 frame to a 2 minutes 14 seconds 24 frame (phrase time length: 10 seconds) set as the phrase of the refrain portion.

The total time length of the two phrases is 20 seconds, and an average time length of a phrase per track is 10 seconds. Therefore, the file name of the phrase information file can be represented as "UPL001. PL. S10." The "S10" represents the average time length of a phrase per track, which is 10 seconds in this case. In this example, the file of the play list and the phrase information file are separate files. However, it is also possible to create only the phrase information file and use it as the play list as well.

### (Generation procedure of the phrase information file on the information reproducing apparatus)

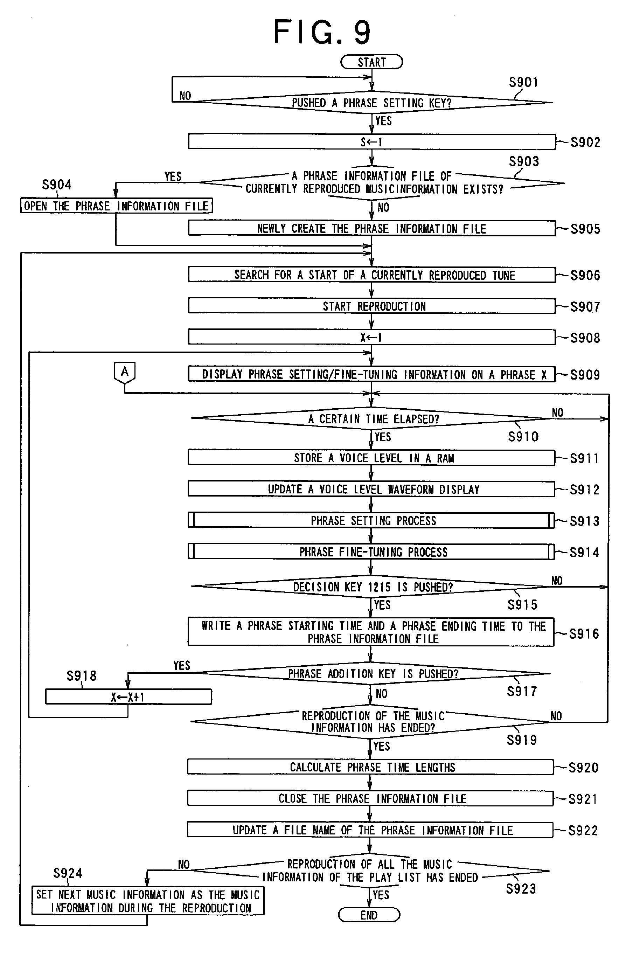

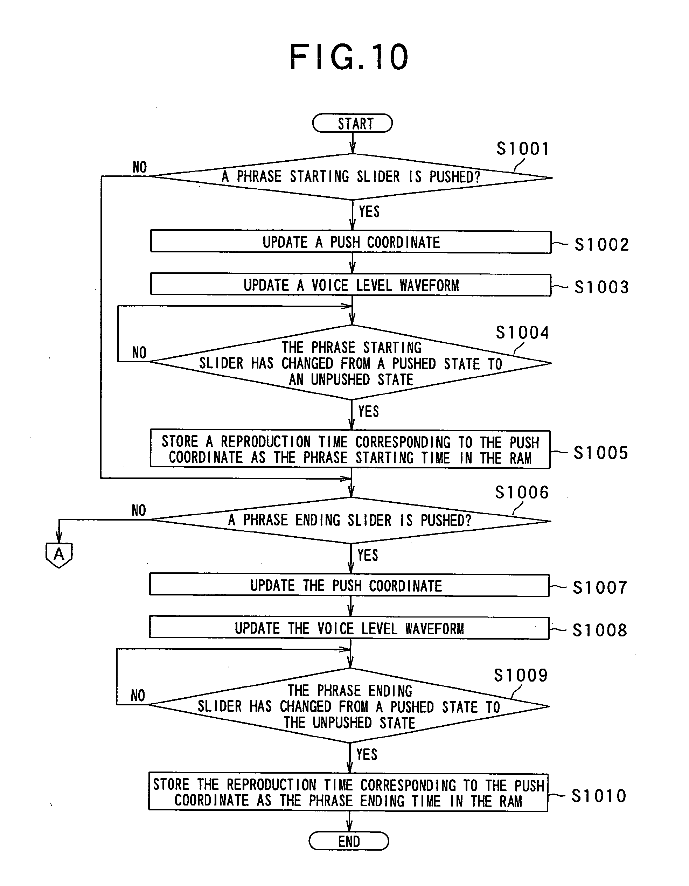

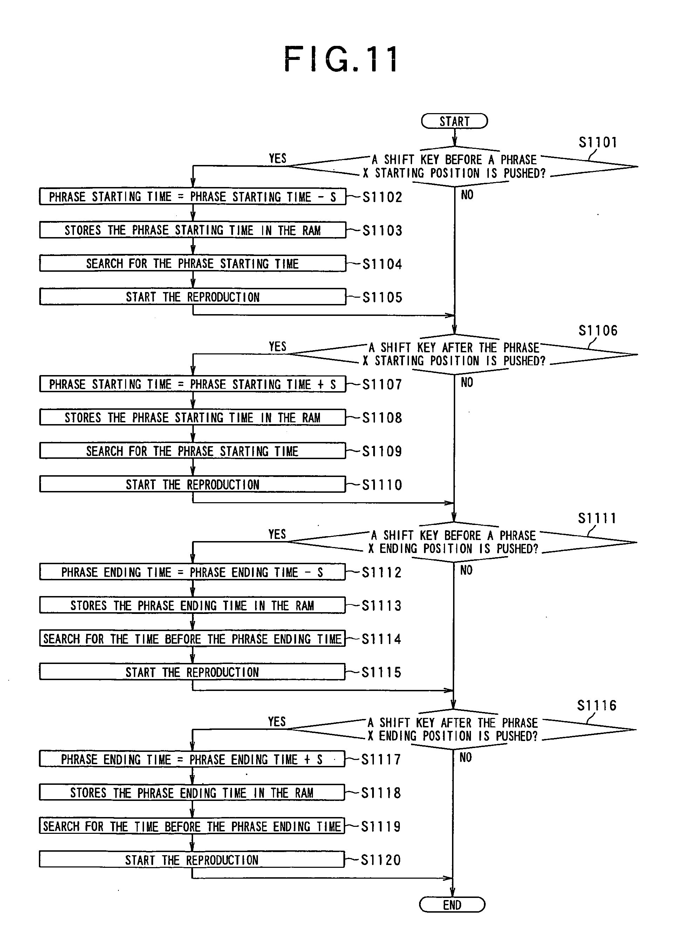

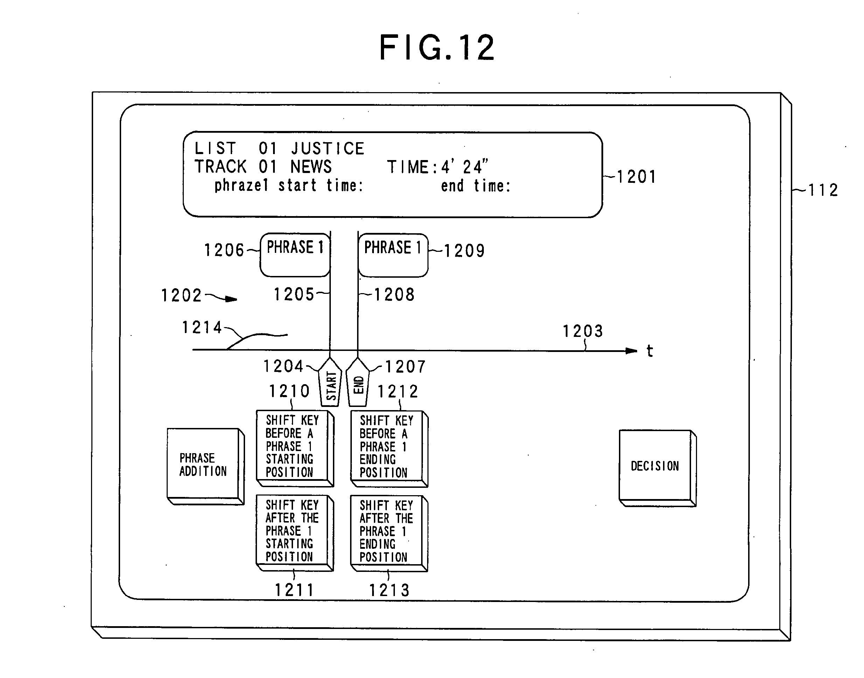

Next, a description will be given as to a generation procedure of the phrase information file as the reproducing section information in the information reproducing apparatus 400 according to the embodiment of the present invention. FIG. 9 is a flowchart showing the generation procedure of the phrase information file in the information reproducing apparatus 400 according to the embodiment of the present invention. FIG. 10 is a flowchart showing a phrase setting procedure. FIG. 11 is a flowchart showing a phrase fine-tuning procedure. FIGs. 12 to 15 are explanatory diagrams showing examples of a screen of the touch panel 112 displayed according to the procedure of the flowcharts in FIGs. 9 to 11.

First, whether or not a phrase setting key is pushed (step S901). In the case where the phrase setting key is pushed is determined (step S901: Yes), a shift time is set at one second (step S902). And whether or not the phrase information file of currently reproduced music information exists is determined (step S903). If the file exists (step S903: Yes) , the phrase information file is opened (step S904). If the file does not exist (step S903: No), the phrase information file is newly created (step S905).

Next, the start of the tune of the currently reproduced music information is searched for (step S906). In this case, the music information is displayed in a music information frame 1201 of the touch panel 112 as shown in FIG. 12. In FIG. 12, the play list number "0001," the album title "JUSTICE," the track number "01," the song title "NEWS" and the reproduction time "4' 24" (4 minutes 24 seconds) " are displayed as the music information for instance. And the reproduction starts from the start of the tune (step S907). In this case, a phrase number X is set at 1 (step S908). And as shown in FIG. 12, setting/fine-tuning information 1202 on the phrase X is displayed on the touch panel 112 (step S909).

As shown in FIG. 12, the setting/fine-tuning information 1202 on the phrase X can be represented, for instance, as a starting slider 1204 movable in an axial direction of a time base 1203 by being pushed by the user, a starting line 1205 for moving with the starting slider 1204 to indicate the starting time of the phrase X (X = 1) , a starting time frame 1206 for displaying the starting time at an end of the starting line 1205, an ending slider 1207 movable in the axial direction of the time base 1203 by being pushed by the user, an ending line 1208 for moving with the ending slider 1207 to indicate the ending time of the phrase X (X = 1) , and an ending time frame 1209 for displaying the ending time at the end of the ending line 1208.

Furthermore, it can be represented as a shift key before a starting position 1210 for shifting the position of the starting line 1205 to a reproduction starting side, a shift key after the starting position 1211 for shifting the position of the starting line 1205 to a reproduction ending side, a shift key before an ending position 1212 for shifting the position of the ending line 1208 to the reproduction starting side, and a shift key after the ending position 1213 for shifting the position of the ending line 1208 to the reproduction ending side.

And as shown in FIG. 9, the voice level is recorded in the RAM 103 (step S911) each time a certain time elapses (step S910: Yes), and the voice level stored in the RAM 103 is read so as to update a voice level waveform display (step S912). Thus, as shown in FIG. 12, it is possible to display temporal change in a voice level waveform 1214.

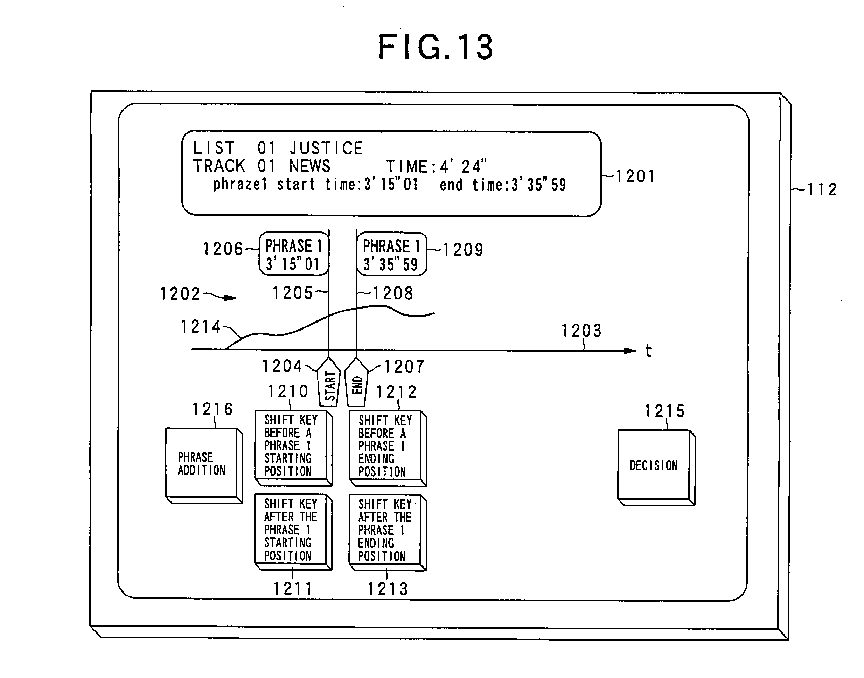

And a phrase setting process (step S913) and a phrase fine-tuning process (step S914) are performed. The phrase setting process and the phrase fine-tuning process will be described later. In the phrase setting process, the display of the touch panel 112 shown in FIG. 12 is updated as shown in FIG. 13.

Thereafter, whether or not a decision key 1215 shown in FIG. 13 is pushed is determined (step S915). In the case where the decision key 1215 is not pushed (step S915: No), the processing moves on to the step S910. In the case where the decision key 1215 is pushed (step S915: Yes), a phrase starting time and a phrase ending time of the phrase X (X = 1) are written into the phrase information file (step S916).

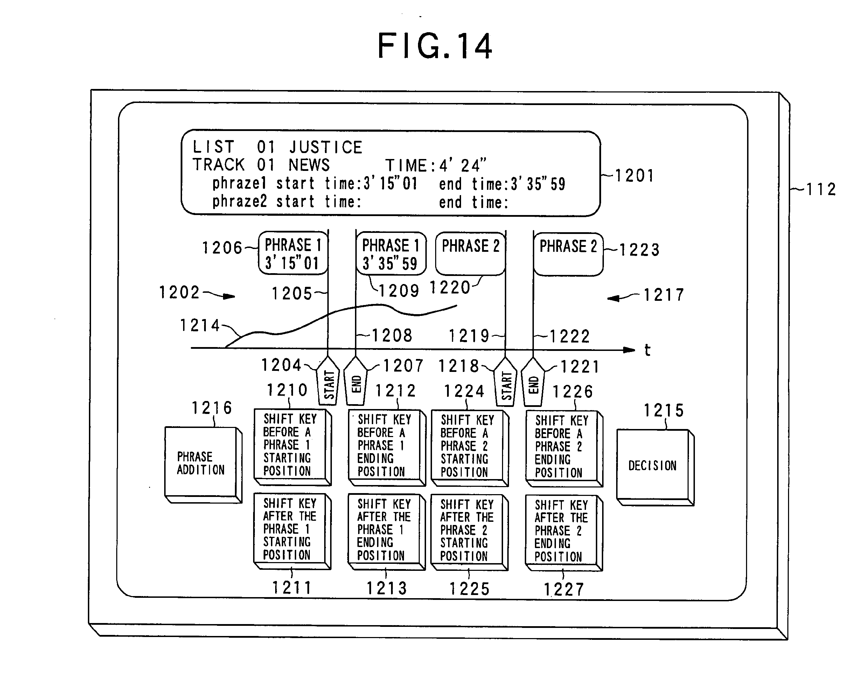

And whether or not a phrase addition key 1216 is pushed is determined (step S917). In the case where the phrase addition key 1216 is pushed (step S917: Yes) , the phrase number is incremented by one (step S918) and the processing moves on to the step S909. In this case, as shown in FIG. 14, setup/fine-tuning information 1217 on the phrase X (X = 2) is displayed.

As with the setting/fine-tuning information 1202 on the phrase X shown in FIG. 12, the setup/fine-tuning information 1217 on the phrase X (X = 2) shown in FIG. 14 can be represented, for instance, as a starting slider 1218, a starting line 1219, a starting time frame 1220, an ending slider 1221, an ending line 1222, an ending time frame 1223, a shift key before the starting position 1224, a shift key after the starting position 1225, a shift key before the ending position 1226, a shift key after the ending position 1227 and so on.

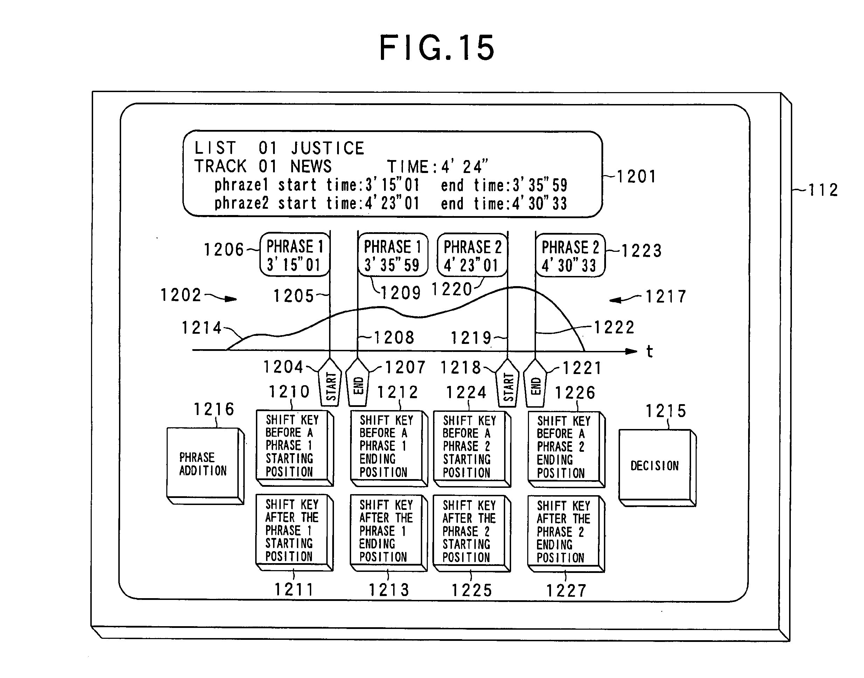

In the case where the phrase addition key 1216 is not pushed (step S917: No), whether or not the reproduction of the music information has ended is determined (step S919). If not ended (step S919: No), the processing moves on to the step S910. If ended (step S919: Yes), the phrases are determined and the phrase time lengths are calculated as shown in FIG. 15 (step S920). And the phrase information file is closed (step S921).

And the file name of the phrase information file is updated based on the track number, the data format and the phrase time length (step S922). Then, whether or not the reproduction of all the music information has ended is determined (step S923). In the case where all the music information has been reproduced (step S923: Yes), the processing finishes. In the case where there is any music information yet to be reproduced (step S923: No), next music information is set as music information during the reproduction (step S924) and the processing moves on to the step S906.

### (Phrase setting procedure)

Next, the phrase setting procedure will be described. FIG. 10 is a flowchart showing the phrase setting procedure. First, whether or not the phrase starting slider 1204 shown in FIG. 12 is pushed is determined (step S1001). If not pushed (step S1001: No) , the processing moves on to the step S1006.

If pushed (step S1001: Yes), a push coordinate of the time base 1203 is updated (step S1002). And the voice level waveform 1214 correspondingly to the updated push coordinate is also updated (step S1003).

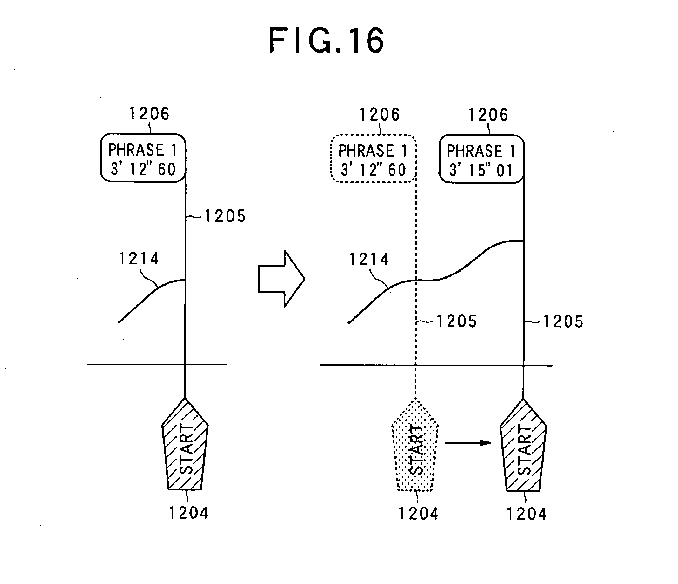

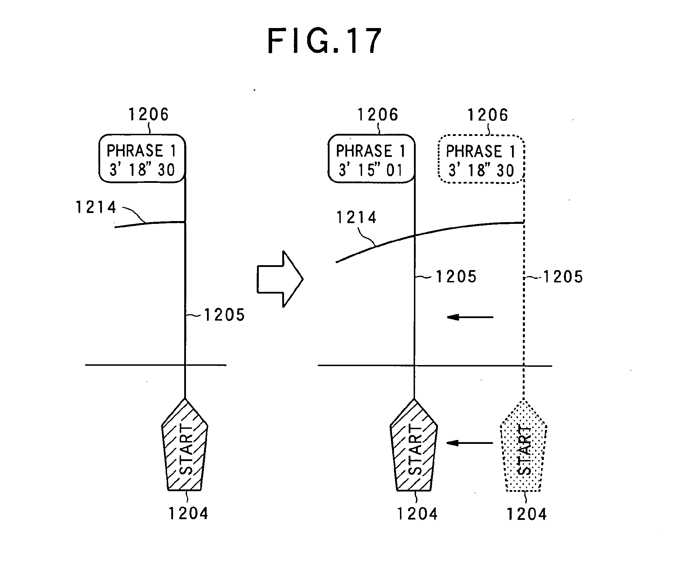

For instance, as shown in FIG. 16, if a user slides the starting slider 1204 rightward while pushing it, the voice level waveform 1214 is also formed rightward by following the starting line 1205. Likewise, as shown in FIG. 17, if the user slides the starting slider 1204 leftward while pushing it, the voice level waveform 1214 follows the starting line 1205 and the portion of the voice level waveform 1214 returned leftward disappears.

And as shown in FIG. 10, whether or not the starting slider 1204 which is pushed has changed to an unpushed state is determined (step S1004). If changed to the unpushed state (step S1004: Yes), the time corresponding to the push coordinate at the time of changing from pushed to unpushed is stored as a phrase starting time in the RAM 103 (step S1005). The music information is reproduced from the phrase starting time.

Next, whether or not the ending slider 1207 is pushed is determined (step S1006). If not pushed (step S1006: No), the processing moves on to the step S910. If pushed (step S1006: Yes) , the push coordinate of the time base 1203 is updated (step S1007). And the voice level waveform 1214 correspondingly to the updated push coordinate is also updated (step S1008).

And whether or not the ending slider 1207 which is pushed has changed to the unpushed state is determined (step S1009). If changed to the unpushed state (step S1009: Yes), the time corresponding to the push coordinate at the time of changing from pushed to unpushed is stored as a phrase ending time in the RAM 103 (step S1010). The music information is reproduced from the phrase ending time. Thus, it is possible to specify the phrase (reproducing section) of the phrase X (X = 1).

### (Setting phrase fine-tuning procedure)

Next, the setting phrase fine-tuning procedure will be described. FIG. 11 is a flowchart showing the phrase fine-tuning procedure. As shown in FIG. 11, in the case where the shift key before the phrase starting position 1210 is pushed (step S1101: Yes), S second (S = 1) is subtracted from the phrase starting time (step S1102), and the phrase starting time is stored in the RAM 103 (step S1103).

And the number of pieces of data corresponding to the phrase starting time from the start of the tune is read to search for the phrase starting time (step S1104). And the music information is reproduced from the phrase starting time searched for (step S1105).

Next, after the step S1105 or in the case where the shift key before the phrase starting position 1210 is not pushed (step S1101: No) , whether or not the shift key after the phrase starting position 1211 is pushed is determined (step S1106). If pushed (step S1106: Yes), S second (S = 1) is added to the phrase starting time (step S1107), and the phrase starting time is stored in the RAM 103 (step S1108).

And the number of pieces of data corresponding to the phrase starting time from the start of the tune is read to search for the phrase starting time (step S1109). And the music information is reproduced from the phrase starting time searched for (step S1110).

After the step S1110 or in the case where the shift key after the phrase starting position 1211 is not pushed (step S1106: No), whether or not the shift key before the phrase ending position 1212 is pushed is determined (step S1111). If pushed (step S1111: Yes), S second (S = 1) is subtracted from the phrase ending time (step S1112) , and the phrase ending time is stored in the RAM 103 (step S1113).

And the number of pieces of data corresponding to the phrase ending time is read from the start of the tune to search for the time several seconds (3 to 5 seconds for instance) before the phrase ending time (step S1114). And the music information is reproduced from the time several seconds before the phrase ending time searched for (step S1115).

Next, after the step S1115 or in the case where the shift key before the phrase ending position 1212 is not pushed (step S1111: No) , whether or not the shift key after the phrase ending position 1213 is pushed is determined (step S1116). If not pushed (step S1116: No), the processing finishes.

If pushed (step S1116: Yes), S second (S = 1) is added to the phrase ending time (step S1117), and the phrase ending time is stored in the RAM 103 (step S1118).

And the number of pieces of data corresponding to the phrase ending time is read from the start of the tune to search for the time several seconds (3 to 5 seconds for instance) before the phrase ending time (step S1119). And the music information is reproduced from the time several seconds (3 to 5 seconds for instance) before the phrase ending time searched for (step S1120). Thus, the phrase starting time and the phrase ending time can be fine-tuned by the second.

According to the above-mentioned phrase setting process, the user can set the phrases of the portions of the music information such as the refrain and intro by a simple operation while hearing the music reproduced by the music information. In the case where the phrase provided in advance by a data provider does not match with the phrase desired by the user, the user can set the desired phrase by the simple operation. As for the set phrases, the user can also reset them by the above-mentioned phrase setting process so as to easily edit the phrases according to his or her use and preference.

When setting the phrases, the voice level waveforms of the voice during the reproduction and so on which change over time are displayed in chronological order on the display screen. For instance, the refrain portion of the music information is relatively high-pitched. Therefore, the user can refer to the voice level waveform of the refrain portion and thereby slide the starting sliders 1204, 1218 and the ending sliders 1207, 1221 so as to easily indicate the phrase starting time or the phrase ending time of the refrain portion.

If the user indicates the starting sliders 1204, 1218 at the phrase starting time, the music information is reproduced from that time. Therefore, it is possible to check a melody corresponding to the phrase starting time indicated by the starting sliders 1204, 1218.

As for the phrase ending time of the refrain portion, the user can indicate the ending sliders 1207, 1221 at the phrase ending time of the refrain portion so that the music information can be reproduced from the time several seconds (3 to 5 seconds for instance) before the phrase ending time. Thus, it is possible, by hearing the process of finishing the set phrase, to check easily whether or not the phrase ending time is set correctly.

The user can shift the phrase starting time and the phrase ending time by the second or by the frame with the shift keys 1210 to 1213 and 1224 to 1227. Thus, it is possible, by gradually changing the phrase starting time and the phrase ending time of the set phrase, to fine-tune the phrase starting time and the phrase ending time so as to improve operability.

### (Phrase reproduction procedure, reserved reproduction procedure and sound quality change procedure)

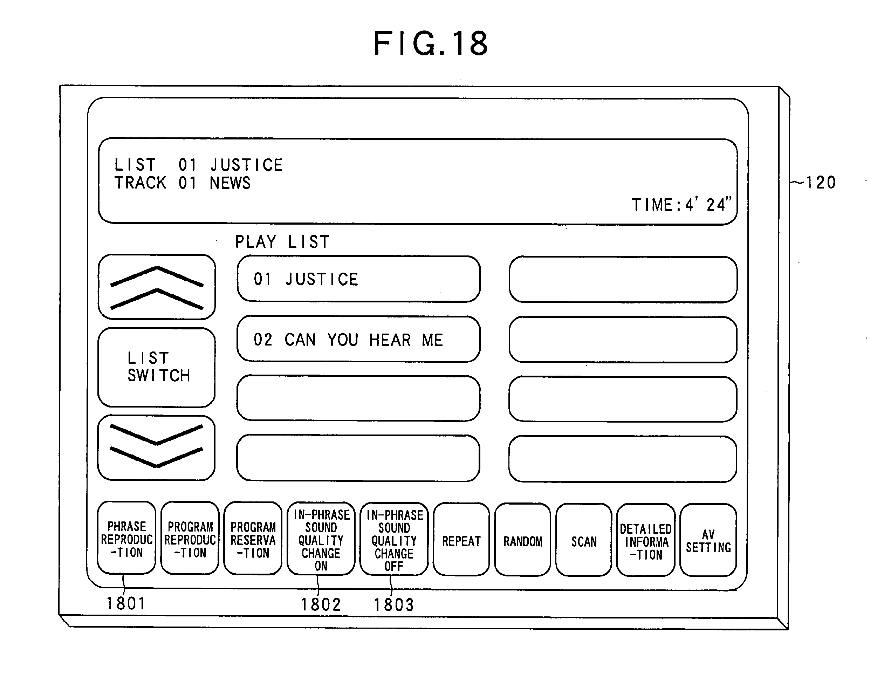

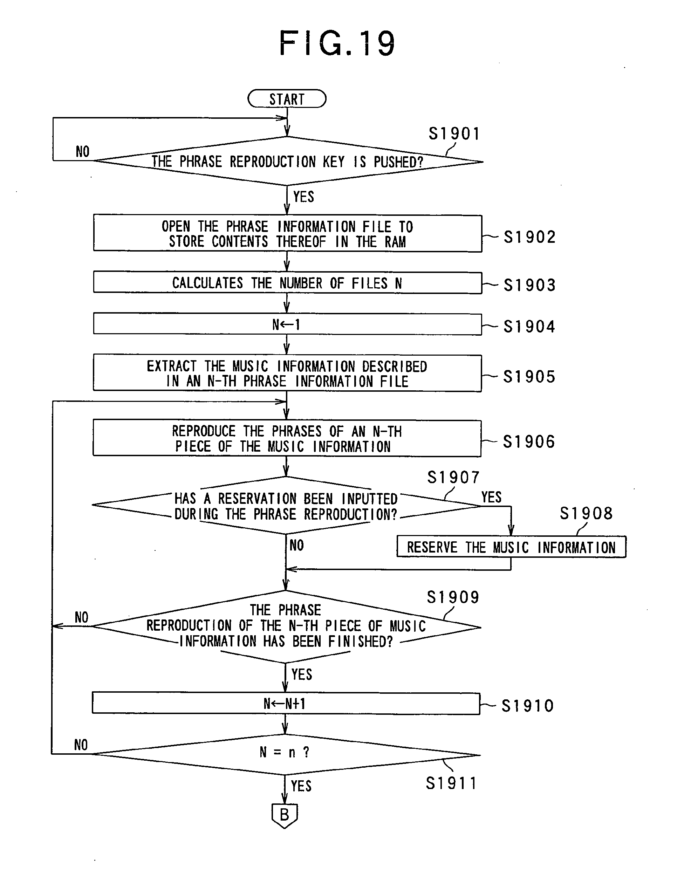

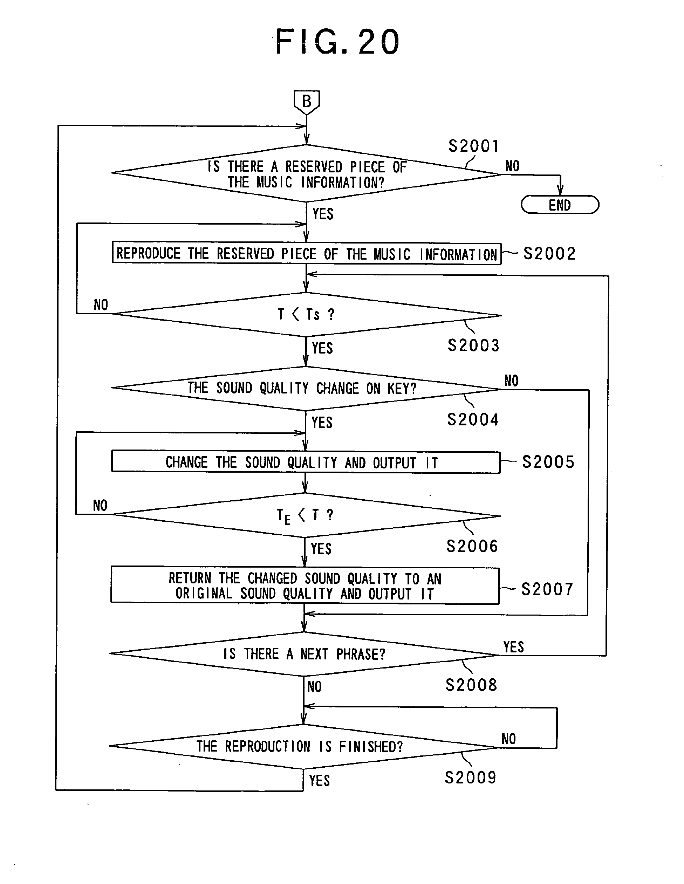

Next, a description will be given as to a phrase reproduction procedure, a reserved reproduction procedure and a sound quality change procedure of an arbitrary play list. FIG. 18 is an explanatory diagram showing an example of the display screen in a phrase reproduction mode on the touch panel 112. FIGs. 19 and 20 are flowcharts showing the phrase reproduction procedure, reserved reproduction procedure and sound quality change procedure.

As shown in FIG. 18, the touch panel 112 has a phrase reproduction key 1801, an in-phrase sound quality change ON key 1802 and an in-phrase sound quality change OFF key 1803 displayed thereon. If the phrase reproduction key 1801 is pushed, phrase reproduction is started. If the sound quality change ON key 1802 is pushed, sound quality change is turned on so that the phrase is reproduced with the sound quality changed in advance by the sound quality changing circuit 206. To turn off the sound quality change, the sound quality change OFF key 1803 is pushed.

As shown in FIG. 19, in the case where the phrase reproduction key 1801 is pushed (step S1901: Yes), a phrase information file of an arbitrary play list is opened, and the contents thereof are stored in the RAM 103 (step S1902). And the number of phrase information files n is calculated (step S1903). And N is set at N = 1 (step S1904).

Next, the music information in the play list is extracted from the track numbers described in an N-th phrase information file (step S1905). the phrases of an N-th (N = 1) piece of the music information is reproduced based on the N-th (N = 1) piece of music information extracted and the phrase information file thereof (step S1906). To be more precise, the phrases of the music information are reproduced from the phrase starting time of the phrase information file, and the phrase reproduction is stopped at the ending time of the phrase information file.

Next, whether or not a reservation has been inputted during the phrase reproduction of the N-th piece of music information is determined (step S1907). In the case where the reservation has been inputted (step S1907: Yes) , that piece of music information is reserved (step S1908). In the case where no reservation has been inputted (step S1907: No) or after reserving the piece of music information (step S1908), whether or not the phrase reproduction of the N-th piece of music information has been finished is determined (step S1909).

If not finished (step S1909: No) , the processing moves on to the step S1906. If finished (step S1909: Yes), a value of N is incremented by one (step S1910). If not N = n (step S1911: No), the processing moves on to the step S1906. If N = n (step S1911), whether or not there is a reserved piece of the music information is determined as shown in FIG. 20 (step S2001).

As shown in FIG. 20, in the case where there is the reserved piece of the music information (step S2001: Yes), the reproduction of the reserved piece of the music information starts (step S2002). In the case where a reproduction time T has not reached a phrase starting time Ts (step S2003: No) , the processing moves on to the step S2002. In the case where the reproduction time T has reached the phrase starting time Ts (step S2003: Yes) , whether or not the in-phrase sound quality change ON key 1802 shown in FIG. 18 was pushed in advance is determined (step S2004).

In the case where the in-phrase sound quality change ON key 1802 has not been pushed (step S2004: No) , the processing moves on to the step S2008. In the case where the in-phrase sound quality change ON key 1802 was pushed in advance (step S2004: Yes), the sound quality is changed and the voice is outputted (step S2005). This voice output continues until the reproduction time T passes a phrase ending time T_{E} (step S2006: No).

And in the case where the reproduction time T has passed the phrase ending time T_{E} (step S2006: Yes) , the sound quality changed in the step S2005 is returned to an original sound quality so as to output the voice (step S2007). And in the case where there is a next phrase (step S2008: Yes), the processing moves on to the step S2003.

And in the case where there is no next phrase (step S2008: No), whether or not the reproduction is finished is determined (step S2009). In the case where the reproduction is finished (step S2009: Yes), the processing moves on to the step S2001. Thus, it is possible, as to the phrases set by phrase setting, to output the voice with the sound quality different from the portions other than the phrases.

According to this phrase reproduction process, the user can use the phrase information file to reproduce the phrases of a plurality of pieces of the music information so as to enjoy a medley. It is also possible to use it as an index of the music information by setting a short time interval between the phrase starting time and the phrase ending time according to the phrase information file.

In the case of using it as the index of the music information, it is possible, by the above-mentioned reserved reproduction process, to do a reservation input by specifying the music information during the phrase reproduction when continuously reproducing the phrases of a plurality of pieces of the music information. Thus, it is possible, after finishing the phrase reproduction of all the music information, to normally reproduce the tune for which the reservation input was done. Therefore, the user can choose only desirable pieces out of the plurality of pieces of the music information by reproducing the phrases of a characteristic portion such as the refrain so as to efficiently select the tunes meeting the user's preference.

According to a sound quality change process, if the set phrase is the refrain portion of the music for instance, the user can enjoy singing the refrain portion like karaoke by canceling the vocal sound thereof. The user can also adjust the echo of the refrain portion to enhance presence of the voice of the refrain portion. The user can also adjust the volume of the refrain portion to enhance a mood for music appreciation.

Especially, in the case of hearing music while driving with a car stereo system as an example of the information reproducing apparatus 400, it is possible to automatically change the sound quality of the refrain portion and so on by the above-mentioned sound quality change process so as to render the music appreciation while driving more enjoyable. In that case, the driver does not need to manually adjust vocal sound, echo and volume or look at the car stereo so that the driving can be safe.

### (Other examples of the display portion)

The above-mentioned information reproducing apparatus 400 uses the touch panel 112 as an example of the display portion 407. However, it is not limited to the touch panel 112 but the display 112 may also be used. In this case, it is possible to use input devices such as the input key or the keyboard/mouse 110 so as to do various inputs.

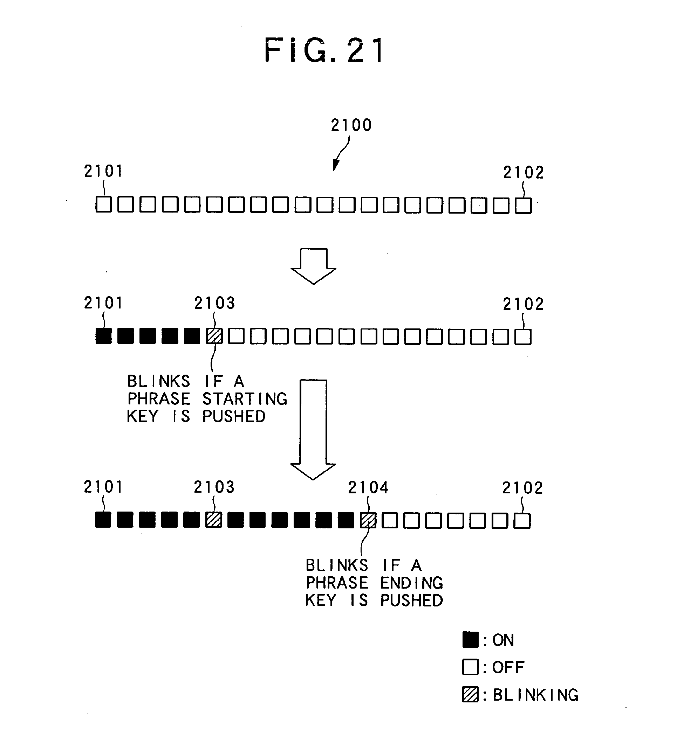

The voice level waveform 1214 is displayed by the display/touch panel 112. However, the contents to be displayed are not limited to the voice level waveform 1214. For instance, it is possible, as shown in FIG. 21, to display the bar indicating a reproduction status in a temporal direction with an LED (Light-Emitting Diode) segment 2100 comprised of a plurality of LEDs arranged in a predetermined direction. The LED segment 2100 has the LEDs lit up in order from a leftmost LED 2101 when the music information is reproduced, and has a rightmost LED 2102 lit up when the reproduction of the music information is finished.

In this case, if a phrase starting input key not shown is pushed during the reproduction of the music, an LED 2103 corresponding to a current reproduction time blinks. The reproduction of the music information continues, and an LED 2104 corresponding to the current reproduction time blinks if a phrase ending input key not shown is pushed. And it is possible to specify the phrase starting time and the phrase ending time by pushing the decision key not shown.

Thus, it is possible to set the phrases by a simple operation even in the case of the information reproducing apparatus not comprising the display/touch panel 112 such as a car stereo system.

According to the above-mentioned embodiment, the phrase starting time and the phrase ending time are specified by the starting sliders 1204, 1218 and the ending sliders 1207, 1221 so as to set the phrase reproducing section. It is also possible, however, to specify two phrase reproduction times so that an earlier phrase reproduction time is the phrase starting time and a later phrase reproduction time is the phrase ending time.

### (Other examples of the phrase setting procedure)

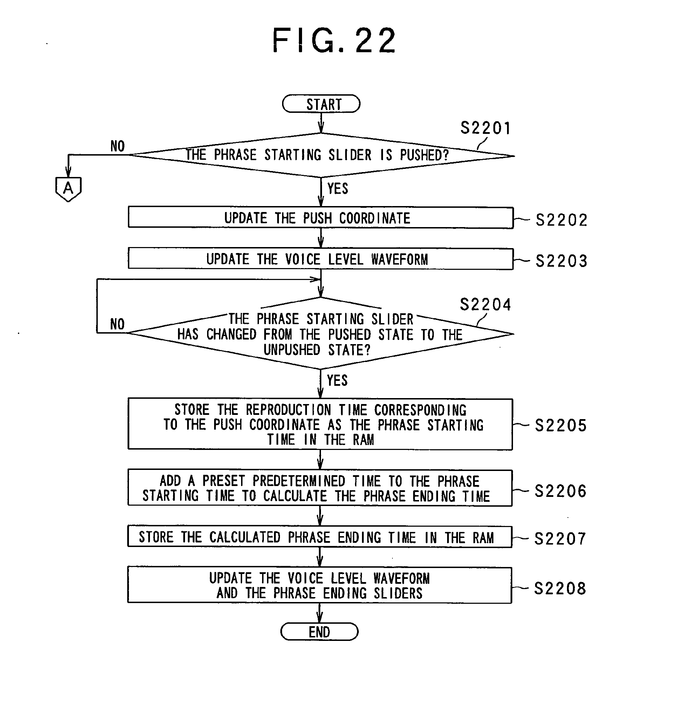

According to the phrase setting procedure of the above-mentioned embodiment, the phrase starting time and the phrase ending time are set for each phrase by the user's operation. However, it is also possible, by presetting a predetermined time such as 5 seconds or 10 seconds for instance, to have the phrase ending time set just by specifying the phrase starting time. The phrase setting procedure in this case will be described by using the flowchart in FIG. 22.

As shown in FIG. 22, in the case where the starting slider 1204 is not pushed (step S2201: No), the processing moves on to the step S910 shown in FIG. 9. In the case where the phrase starting slider 1204 is pushed (step S2201: Yes), the push coordinate of the time base 1203 is updated (step S2202). And the voice level waveform 1214 is also updated correspondingly to the updated push coordinate (step S2203) .

And whether or not the starting slider 1204 which is pushed has changed to the unpushed state is determined (step S2204). If changed to the unpushed state (step S2204: Yes), the time corresponding to the push coordinate at the time of changing from pushed to unpushed is stored as a phrase starting time in the RAM 103 (step S2205). The music information is reproduced from the phrase starting time.

And the predetermined time such as 3 seconds, 5 seconds or 10 seconds is added to the phrase starting time so as to calculate the phrase ending time (step S2206). And the calculated phrase ending time is stored in the RAM 103 (step S2207). And the voice level waveform 1214 and the phrase ending sliders are updated until the phrase ending time (step S2208).

According to the phrase setting procedure, the user can create the phrase information file just by specifying the phrase starting time. Thus, it is possible to set the phrases by unifying as a fixed time the reproduction times of the phrases set for the plurality of pieces of the music information respectively. And it is possible, by continuously reproducing these phrases, to use them as the indexes of the plurality of pieces of the music information.

It is also feasible, though not shown in the drawings, to calculate the phrase starting time by specifying the phrase ending time and subtracting a preset predetermined time from the specified phrase ending time. As the phrases can be set by specifying only one of the phrase starting time and the phrase ending time, it is possible to simplify a phrase setting operation.

As described above, according to the information reproducing apparatus 400 according to this embodiment, the user can set the phrase of a portion of the music such as the refrain or intro by the simple operation, for instance.

There are the cases where, if a portion of the music information is extracted and copied or stored, it gets deteriorated. However, data contents of the phrase information file generated by the above-mentioned information reproducing apparatus 400 do not include themusic information, and in particular, the music data file shown in FIG. 3. Therefore, it is not necessary to copy or store the music information, and no deterioration of the sound quality of the music information occurs. Thus, the phrases can be reproduced with the same sound quality as the music information.

The phrase information file can be constituted by text data, and so it can be edited by a general-purpose text editor. Therefore, even in the case where the information reproducing apparatus 400 does not exist, it is possible to correct the phrase information file or send and receive the phrase information file via the network by using a personal computer and mobile terminal devices such as a PDA and a cell phone comprising a general-purpose text editor.

According to the above-mentioned embodiment, the music information is used as continuously reproducible reproducing information. However, other voice information may be used if continuously reproducible. As for such other voice information, conversation for language learning and recorded contents of meetings can be named other than the music information.

For instance, in the case of conversation for language learning, only hard-to-hear phrases are set and repeatedly reproduced so that the user can omit unnecessary phrases to intensively catch the hard-to-hear phrases.

In the case of the recorded contents of meetings, it is possible, by setting only a remark of a certain person who joined a meeting as the reproducing section information so as to reproduce only the remark of that certain person. Thus, it is not necessary to hear the recorded contents of the meeting all over again, and it is possible to intensively hear the remark of the certain person so as to improve efficiency of information gathering.

The reproducing information may be video information other than voice information. As for video information, commercially available video contents such as movies, live videos of music and documentaries, videos of recorded TV programs, images taken by a video camera and so on can be named. As for such video information, it is possible, as with the above-mentioned voice information, to create the reproducing section information and thereby obtain the same effect as the above-mentioned voice information.

For instance, as for the video information on a baseball relay broadcast, it is possible, by setting only a certain hitter's at-bats as the reproducing section, to view only that certain hitter's at-bats. Thus, it is not necessary to view the entire baseball relay broadcast all over again, and it is possible to view the video of the user's desirable hitter's at-bats so as to improve efficiency of information gathering. It is also possible to set only scenes in which the hitter retires or sends a hit as the reproducing sections so as to reproduce it like a digest version.

An example of the baseball relay broadcast was described here. It is also possible, as to other video information, to set a certain person or a certain scene as the reproducing section so as to reproduce it like the digest version for each individual user.

The information reproducing method described in this embodiment can be implemented by executing the programprepared in advance on a computer such as the personal computer or a workstation. This program is recorded on computer-readable recording media such as a hard disk, a flexible disk, a CD-ROM, an MO, a DVD and so on, and is read from the recording media to be executed by the computer. This program may also be a transmission medium distributable via a network 116 such as the Internet.

The information reproducing apparatus 400 according to the above-mentioned embodiment may be applied to players and karaoke consoles using compressed data such as a CD player, an MD player, an MD recorder, a DVD player, a DVD recorder, MP3 and WMA for instance. The information reproducing apparatus may also be used as the one for domestic use, for business use, of a portable type or of an in-vehicle type for instance.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An information reproducing method **characterized in that** the information reproducing method comprises:
an information reproducing process which continuously reproduces reproducing information;
a reproducing position specifying process which specifies a plurality of arbitrary reproducing positions in the reproducing information; and
a reproducing section information generating process which generates reproducing section information indicating a portion of reproducing sections in the reproducing information based on the plurality of reproducing positions specified by the reproducing position specifying process.

2. The information reproducing method according to claim 1, wherein the reproducing position specifying process specifies the reproducing positions based on reproduction progress statuses of the reproducing information displayed in chronological order.

3. The information reproducing method according to claim 1, further comprising:
a reproducing information extracting process which extracts a portion of the reproducing information reproduced in the portion of the reproducing sections from the reproducing information; and
a portion reproducing process which reproduces the portion of the reproducing information extracted by the reproducing information extracting process.

4. The information reproducing method according to claim 3, further comprising a reproducing information specifying process which accepts specification of the reproducing information from which the portion of the reproducing information is extracted while the portion of the reproducing information is reproduced by the portion reproducing process, wherein
the information reproducing process reproduces the reproducing information of which specification is accepted by the reproducing information specifying process.

5. The information reproducing method according to any one of claims 1 to 4, further comprising a voice outputting process which outputs the portion of the reproducing information in the portion of the reproducing sections as a voice of a sound quality different from the reproducing information of the sections other than the portion of the reproducing sections.

6. A recording medium on which an information reproducing program is recorded so as to be readable through a computer which is included in an information reproducing apparatus with a pre-installed recording medium, wherein the information reproducing program causes the computer to execute the information reproducing method according to any one of claims 1 to 4.

7. An information reproducing method **characterized in that** the information reproducing method comprises:
an information reproducing process which continuously reproduces reproducing information;
a reproducing position specifying process which specifies an arbitrary reproducing position in the reproducing information; and
a reproducing section information generating process which generates reproducing section information indicating a portion of reproducing sections in the reproducing information based on the reproducing position specified by the reproducing position specifying process and a preset reproducing position.

8. The information reproducing method according to claim 7, wherein the reproducing position specifying process specifies the reproducing positions based on reproduction progress statuses of the reproducing information displayed in chronological order.

9. The information reproducing method according to claim 7, further comprising:
a reproducing information extracting process which extracts a portion of the reproducing information reproduced in the portion of the reproducing sections from the reproducing information; and
a portion reproducing process which reproduces the portion of the reproducing information extracted by the reproducing information extracting process.

10. The information reproducing method according to claim 9, further comprising a reproducing information specifying process which accepts specification of the reproducing information from which the portion of the reproducing information is extracted while the portion of the reproducing information is reproduced by the portion reproducing process, wherein
the information reproducing process reproduces the reproducing information of which specification is accepted by the reproducing information specifying process.

11. The information reproducing method according to any one of claims 7 to 10, further comprising a voice outputting process which outputs the portion of the reproducing information in the portion of the reproducing sections as a voice of a sound quality different from the reproducing information of the sections other than the portion of the reproducing sections.

12. A recording medium on which an information reproducing program is recorded so as to be readable through a computer which is included in an information reproducing apparatus with a pre-installed recording medium, wherein the information reproducing program causes the computer to execute the information reproducing method according to any one of claims 7 to 10.

13. An information reproducing apparatus (400) **characterized in that** the information reproducing apparatus (400) comprises:
an information reproducing device (405) which continuously reproduces reproducing information;
a specifying device (411) which specifies a plurality of arbitrary reproducing positions in the reproducing information; and
a reproducing section information generating device (412) which generates reproducing section information indicating a portion of reproducing sections in the reproducing information based on the plurality of reproducing positions specified by the specifying device (411).

14. The information reproducing apparatus (400) according to claim 13, further comprising a display device (407) which displays reproduction progress statuses of the continuously reproduced reproducing information in chronological order, wherein
the specifying device (411) specifies the reproducing position based on the reproduction progress statuses of the reproducing information displayed by the display device (407).

15. The information reproducing apparatus (400) according to claim 13, further comprising a reproducing information extracting device (404) which extracts a portion of the reproducing information reproduced in the portion of the reproducing sections from the reproducing information, wherein
the information reproducing device (405) reproduces the portion of the reproducing information extracted by the reproducing information extracting device (404).

16. The information reproducing apparatus (400) according to claim 15, further comprising a reproducing information specifying device (408) which specifies the reproducing information from which the portion of the reproducing information is extracted while the portion of the reproducing information is reproduced by the information reproducing device (405), wherein
the information reproducing device (405) reproduces the reproducing information specified by the reproducing information specifying device (408).

17. The information reproducing apparatus (400) according to any one of claims 14 to 16, further comprising:
a reproducing section determining device (409) that determines whether or not the reproducing information of which reproducing section information is generated by the reproducing section information generating device (412) reproduces the reproducing sections indicated by the reproducing section information; and
a sound quality changing device (410) that changes a soundqualityofvoiceoutputtedbythereproducinginformation based on a determination result determined by the reproducing section determining device (409).

18. An information reproducing apparatus (400) **characterized in that** the information reproducing apparatus (400) comprises:
an information reproducing device (405) which continuously reproduces reproducing information;
a specifying device (411) which specifies an arbitrary reproducing position in the reproducing information; and
a reproducing section information generating device (412) which generates reproducing section information indicating a portion of reproducing sections in the reproducing information based on the reproducing position specified by the specifying device (411) and a preset reproducing position.

19. The information reproducing apparatus (400) according to claim 18, further comprising a display device (407) which displays reproduction progress statuses of the continuously reproduced reproducing information in chronological order, wherein
the specifying device (411) specifies the reproducing position based on the reproduction progress statuses of the reproducing information displayed by the display device (407).

20. The information reproducing apparatus (400) according to claim 18, further comprising a reproducing information extracting device (404) which extracts a portion of the reproducing information reproduced in the portion of the reproducing sections from the reproducing information, wherein
the information reproducing device (405) reproduces the portion of the reproducing information extracted by the reproducing information extracting device (404).

21. The information reproducing apparatus (400) according to claim 20, further comprising a reproducing information specifying device (408) which specifies the reproducing information from which the portion of the reproducing information is extracted while the portion of the reproducing information is reproduced by the information reproducing device (405), wherein
the information reproducing device (405) reproduces the reproducing information specified by the reproducing information specifying device (408).

22. The information reproducing apparatus (400) according to any one of claims 19 to 21, further comprising:
a reproducing section determining device (409) that determines whether or not the reproducing information of which reproducing section information is generated by the reproducing section information generating device (412) reproduces the reproducing sections indicated by the reproducing section information; and
a sound quality changing device (410) that changes a sound quality of voice outputted by the reproducing information based on a determination result determined by the reproducing section determining device (409).
